# EUROPEAN PATENT APPLICATION

(11) **EP 1 229 280 A1**
(43) Date of publication of application: **07.08.2002**
(21) Application number: 01102719.0
(22) Date of filing: 06.02.2001
(51) Int. Cl.: F16K 39/02, F16K 1/10

(54) **Fluid flow control valve with integrated pneumatic actuation**

(71) Applicant: Valbia S.r.l., 25060 Brozzo (Brescia) (IT)
(72) Inventor: Bonomi, Aldo, 25065 Lumezzane S.S. (Brescia) (IT)
(74) Representative: Modiano, Guido, Dr.-Ing.

(57) **Abstract**

A fluid flow control valve (1a,1b) with integrated pneumatic actuation, comprising a valve body (2a,2b) which forms, inside it, a passage chamber (30a,30b) for a fluid which is connected to an intake port (3a,3b) and a delivery port (4a,4b). A sealing region (5a,5b) is formed inside the passage chamber (30a,30b), between the intake port and the delivery port, and can be engaged by the head (6a,6b) of a pneumatically actuated flow control element (7a,7b) which can move on command along an actuation path (8a,8b) in order to pass from an open position, in which the head (6a,6b) is disengaged and spaced from the sealing region, to a closed position, in which the head (6a,6b) engages the sealing region. In the flow control element there is a compensation chamber (9a,9b) which is connected in terms of pressure to the passage chamber (30a,30b), and in the compensation chamber there are regions (10a,10b, 11a,11b) for applying the pressure of the fluid which are adapted to convert the pressure into a contrasting force which is parallel to the actuation path (8a,8b) of the flow control element (7a,7b) and is orientated in the opposite direction with respect to the force that is parallel to the actuation path and is generated by the pressure of the fluid on the side of the head (6a,6b) of the flow control element (7a,7b) that is directed toward the sealing region (5a,5b).

## Description

The present invention relates to a fluid flow control valve with integrated pneumatic actuation.

Flow control valves with integrated pneumatic actuation are known and are generally constituted by a valve body in which there is an intake port and a delivery port which are meant to be connected to the two branches of a duct to be controlled by the valve.

The intake port and the discharge port are usually mutually aligned and between these ports there is a sealing region which can be engaged by the head of a flow control element accommodated in the valve body in order to interrupt the connection between the two ports or can be disengaged from the head of the flow control element in order to allow the mutual connection of the two ports.

The movement of the flow control element in order to make it engage or disengage the sealing region, i.e., in order to close or open the valve, is achieved by means of a pneumatic actuator which is associated with the valve body and is connected to the flow control element.

Generally, the flow control element can move along a path which is inclined with respect to the axis of the intake and delivery ports and the action of the pressure of the fluid that enters the valve and acts on the head of the flow control element generates a force which contrasts the force to be applied to flow control element in order to engage it with the sealing region, i.e., in order to close the valve.

In some valves, the force applied to the flow control element in order to close the valve and keep it closed is derived from a spring; in other valves it is instead derived from the pneumatic actuator.

In any case, the force generated by the pressure of the fluid on the flow control element entails oversizing the elements that actuate the flow control element and accordingly entails oversizing of the entire valve.

The aim of the present invention is to solve the above problem, by providing a fluid flow control valve which requires less force for its actuation and accordingly can be actuated with more compact actuators.

Within this aim, an object of the invention is to provide a valve whose overall dimensions can be more compact.

Another object of the invention is to provide a valve which is structurally simple and easy to assemble and maintain.

This aim and these and other objects which will become better apparent hereinafter are achieved by a fluid flow control valve with integrated pneumatic actuation, comprising a valve body which forms, inside it, a passage chamber for a fluid which is connected to an intake port and a delivery port; a sealing region being formed inside said passage chamber, between said intake port and said delivery port, and being engageable by a head of a flow control element which can move on command along an actuation path in order to pass from an open position, in which said head is disengaged and spaced from said sealing region in order to allow the connection of said intake port to said delivery port, to a closed position, in which said head engages said sealing region in order to interrupt the connection of said intake port with said delivery port, and vice versa; pneumatic actuation means being provided in order to move, at least in one direction, said flow control element along said actuation path, characterized in that in said flow control element there is a compensation chamber which is connected in terms of pressure to said passage chamber, and in that in said compensation chamber there are regions for applying pressure of the fluid which are adapted to convert said pressure into a contrasting force which is parallel to said actuation path and is orientated in an opposite direction with respect to a force that is parallel to said actuation path and is generated by the pressure of said fluid on a side of said head of the flow control element that is directed toward said sealing region.

Further characteristics and advantages of the present invention will become better apparent from the following detailed description of two preferred but not exclusive embodiments of the valve according to the invention, illustrated only by way of non-limitative example in the accompanying drawings, wherein:
Figure 1 is a sectional view of a valve according to the invention in its first embodiment, taken along a plane which passes through the axes of the intake port and delivery port and through the axis of the flow control element, with the valve in a closed position;
Figure 2 is a view of the same valve of Figure 1, in an open position;
Figures 3 and 4 are sectional views of the valve in its first embodiment, taken like the preceding figures, respectively in the closed position and in the open position, in a different assembly condition with respect to the one shown in Figures 1 and 2;
Figure 5 is a sectional view of the valve according to the invention in its second embodiment, again taken along a plane which passes through the axes of the intake port and delivery port and through the axis of the flow control element, with the valve in the closed position;
Figure 6 is a view of the valve of Figure 5 in the open position;
Figures 7 and 8 are sectional views of the valve according to the invention in its second embodiment, taken like Figures 5 and 6, respectively in the closed position and in the open position, in a different assembly condition with respect to the valve shown in Figures 5 and 6.

With reference to the figures, the valve according to the invention, generally designated by the reference numerals 1a and 1b in the two embodiments, comprises a valve body 2a, 2b in which there is a fluid passage chamber 30a, 30b which is connected to a port 3a, 3b and to a port 4a, 4b which are meant to be connected to the two branches of the duct whose flow is to be controlled by means of the valve 1a, 1b.

Preferably, as shown, the port 3a, 3b constitutes the intake port, while the port 4a, 4b constitutes the delivery port; nevertheless, the valve according to the invention can also operate if the port 3a, 3b acts as a delivery port and the port 4a, 4b acts as an intake port. For the sake of simplicity in description, hereinafter the port 3a, 3b is considered as the intake port and the port 4a, 4b is considered as the delivery port.

Inside the passage chamber 30a, 30b, between the intake port 3a, 3b and the delivery port 4a, 4b, there is a sealing region 5a, 5b which can be engaged by the head 6a, 6b of a flow control element, generally designated by the reference numerals 7a, 7b, which can move on command along an actuation path 8a, 8b in order to pass from an open position, in which it is disengaged and spaced with its head 6a, 6b from the sealing region 5a, 5b in order to allow the connection of the intake port 3a, 3b to the delivery port 4a, 4b, to a closed position, in which its head 6a, 6b engages the sealing region 5a, 5b in order to interrupt the connection of the intake port 3a, 3b to the delivery port 4a, 4b, and vice versa. The movement of the flow control element 7a, 7b along the actuation path 8a, 8b in order to pass from the open position to the closed position and/or vice versa is achieved by way of pneumatic actuation means which are integrated in the valve and are arranged inside the body 2a, 2b.

According to the invention, inside the flow control element 7a, 7b there is a compensation chamber 9a, 9b which is connected in terms of pressure to the passage chamber 30a, 30b, and in the compensation chamber 9a, 9b there are regions 10a, 10b, 11a, 11b for applying the pressure of the fluid. Such pressure application regions are orientated so as to convert the pressure into a contrasting force which is parallel to the actuation path 8a, 8b and is orientated in the opposite direction with respect to the force, which is likewise parallel to the actuation path 8a, 8b and is produced by the pressure of the fluid on the side of the head 6a, 6b of the flow control element 7a, 7b that is directed toward the sealing region 5a, 5b.

More particularly, the body 2a, 2b is internally hollow and is preferably substantially Y-shaped. The intake port 3a, 3b and the delivery port 4a, 4b are formed in two of the three branches of the Y and are preferably mutually aligned.

The flow control element 7a, 7b is preferably substantially cylindrical, with variations in its diameter along its axial extension, and is accommodated, so that it can slide along its own axis, which is parallel to the actuation path 8a, 8b, inside the third branch of the Y. The head 6a, 6b is constituted by an axial end of said flow control element 7a, 7b.

The axis of the flow control element 7a, 7b is preferably inclined with respect to the axis of the intake port 3a, 3b at an angle of more than 90°, so that the head 6a, 6b of the flow control element 7a, 7b is partially directed toward the intake port 3a, 3b.

The compensation chamber 9a, 9b is formed coaxially inside the flow control element 7a, 7b and is delimited, at one of its axial ends, by the head 6a, 6b.

The compensation chamber 9a, 9b is connected to the passage chamber 30a, 30b through a passage 12a, 12b which passes axially through the head 6a, 6b. Preferably, the compensation chamber 9a, 9b is connected, through the passage 12a, 12b, to the intake port 3a, 3b both when the flow control element 7a, 7b is in the open position and when it is in the closed position.

The regions 10a, 10b, 11a, 11b where the pressure of the fluid inside the compensation chamber 9a, 9b is applied and the region where the pressure of the fluid is applied to the side of the head 6a, 6b that is directed toward the sealing region 5a, 5b preferably have protrusions, on an imaginary plane which is perpendicular to the actuation path 8a, 8b, which are substantially identical to each other so as to achieve balancing of the force produced by the pressure of the fluid on the side of the head 6a, 6b that is directed toward the sealing region 5a, 5b on the part of the contrasting force that is instead produced by the pressure of the fluid inside the compensation chamber 9a, 9b.

More particularly, the regions 10a, 10b, 11a, 11b are produced by increases in the diameter of the compensation chamber 9a, 9b starting from the head 6a, 6b toward the opposite end of the flow control element 7a, 7b. These increases in diameter form annular regions which are arranged on a plane at right angles to the path 8a, 8b and on which the pressure of the fluid contained in the compensation chamber 9a, 9b acts in the opposite direction with respect to the pressure that acts on the side of the head 6a, 6b that is directed toward the sealing region 5a, 5b. The forces produced by the action of the pressure of the fluid contained in the compensation chamber 9a, 9b on the side walls of the compensation chamber cancel each other out and have no effect on the movement of the flow control element 7a, 7b along the actuation path 8a, 8b.

In the first embodiment, the sealing region 5a is formed by an annular shoulder which is formed in the body of the valve and is arranged at right angles to the axis of the flow control element 7a. In the first embodiment, the head 6a of the flow control element supports at the front a gasket 13a which faces the annular shoulder that constitutes the sealing region 5a and can be engaged or disengaged with respect to the sealing region 5a as a consequence of the movement of the flow control element 7a along its axis.

More particularly, the gasket 13a is accommodated in a seat which is formed in the side of the head 6a that is directed toward the sealing region 5a and is locked in said seat by means of the head of a central screw 14a which is screwed into the head 6a. In this embodiment, the passage 12a, which connects the compensation chamber 9a to the intake port 3a, passes through the screw 14a.

In the second embodiment, the sealing region 5b is formed by a cylindrical or conical surface formed inside the body 2b coaxially to the flow control element 7b. The head 6b of the flow control element 7b supports, on its cylindrical side wall, a gasket 13b which can engage or disengage the cylindrical or conical surface that constitutes the sealing region 5b.

Conveniently, both in the first embodiment and in the second embodiment, the flow control element 7a, 7b has, on its outer lateral surface, an axial shoulder 15a, 15b which can engage an abutment 36a, 36b which is provided inside the body 2a, 2b in order to limit the stroke of the flow control element 4 toward the sealing region 5a, 5b, so as to avoid applying excessive stress to the gasket 13a, 13b.

The pneumatic actuation means comprise a portion 16a, 16b of the axial extension of the flow control element 7a, 7b which is provided as the plunger of a pneumatic cylinder and can slide within a cylindrical actuation chamber 17a, 17b which is formed in the body 2a, 2b coaxially around the flow control element 7a, 7b. The plunger-like portion 16a, 16b divides said actuation chamber 17a, 17b into two half-chambers, each of which is connected to a port 18a, 18b, 19a, 19b.

At least one of the ports 18a or 19a, 18b or 19b can be connected to a duct for feeding compressed air in order to produce the movement of the portion 16a, 16b and therefore of the flow control element 7a, 7b along the actuation path 8a, 8b at least in one direction.

Conveniently, there are elastic means, constituted for example by a spring 20a, 20b, which are interposed between the flow control element 7a, 7b and the body 2a, 2b in order to contrast or assist the movement of the flow control element 7a, 7b produced by the injection of compressed air into one of the two half-chambers that constitute the actuation chamber 17a, 17b, depending on the performance and use of the valve according to the invention, as detailed hereinafter.

The axial end of the actuation chamber 17a, 17b that lies opposite the head 6a, 6b of the flow control element 7a, 7b is closed by a cap 21a, 21b which is screwed onto the body 2a, 2b and can be removed in order to extract or insert the flow control element 7a, 7b in the body 2a, 2b of the valve.

The cap 21a, 21b, in addition to closing an axial end of the actuation chamber 17a, 17b, has a cylindrical central protrusion 22a, 22b which is coaxial to the flow control element 7a, 7b and engages, slidingly and hermetically, inside the axial end of the flow control element 7a, 7b that lies opposite the head 6a, 6b, also closing the axial end of the compensation chamber 9a, 9b that lies opposite with respect to the head 6a, 6b. In this manner, the pressure of the fluid inside the compensation chamber 9a, 9b that is discharged onto the protrusion 22a, 22b has no effect on the flow control element 7a, 7b.

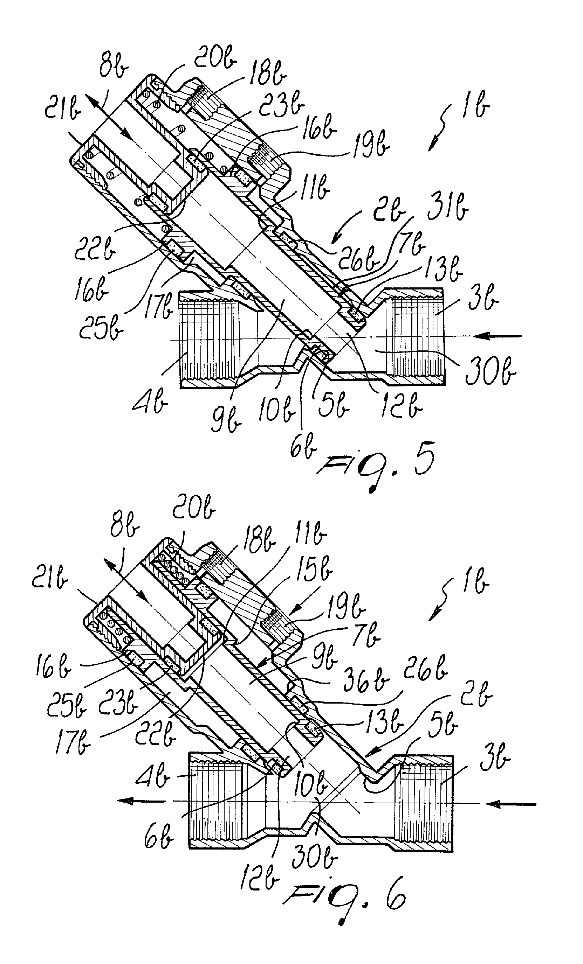

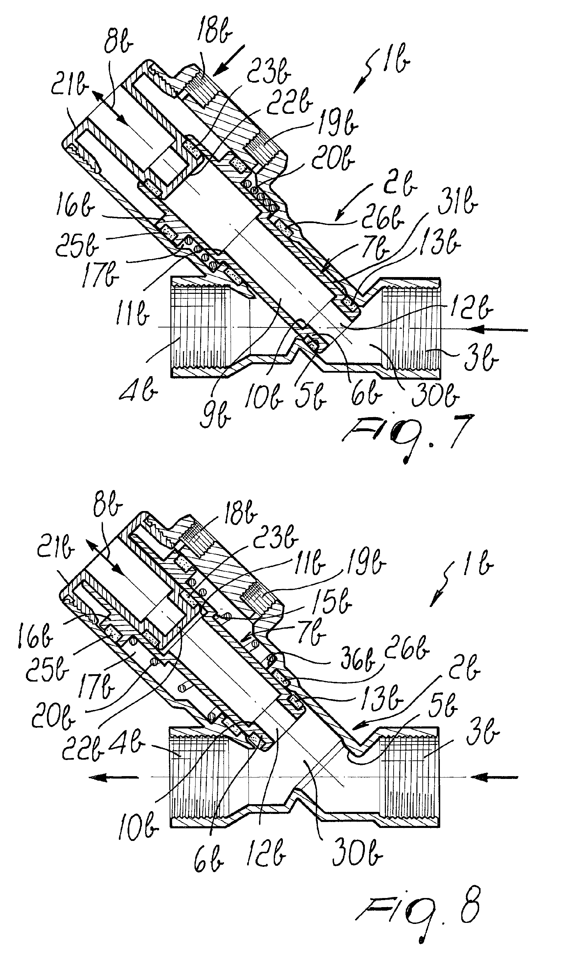

Conveniently, as shown in Figures 5 to 8 with reference to the second embodiment, around the flow control element 7b there is an annular chamber 31b which is connected to the passage chamber 30a, 30b. The presence of the annular chamber 31b eliminates or at least significantly reduces the force, orientated at right angles to the actuation path 8b, generated by the pressure of the fluid on the side walls of the flow control element 7b.

An annular chamber similar to the annular chamber 31b can also be provided around the flow control element 7a of the valve in its first embodiment.

For the sake of completeness in description, it should be noted that sealing gaskets 23a, 23b, 24a are provided between the protrusion 22a, 22b and the flow control element 7a, 7b, and that there is also a sealing gasket 25a, 25b between the plunger-like portion 16a, 16b and the walls of the actuation chamber 17a, 17b. Other sealing gaskets 26a, 26b, 27a are interposed between the body 2a, 2b and the flow control element 7a, 7b so as to separate the actuation chamber 17a, 17b from the fluid that passes through the valve.

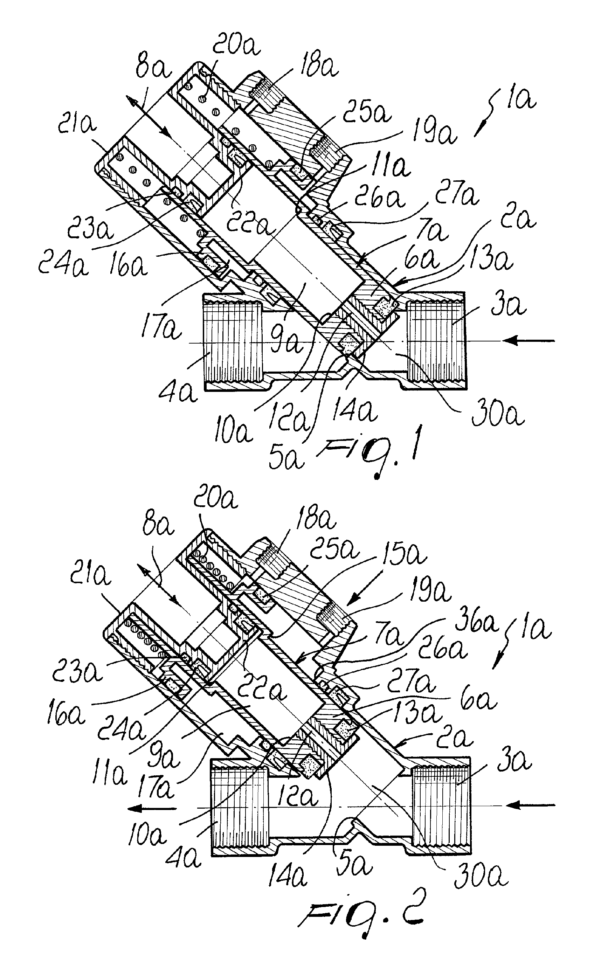

If a so-called normally-closed valve is required, the valve is assembled, as shown in Figures 1, 2, 5 and 6, by arranging the spring 20a, 20b in the half-chamber of the actuation chamber 17a, 17b that is delimited by the cap 21a, 21b and by the plunger-like portion 16a, 16b. The port 18a, 18b is constantly kept connected to the atmosphere, while the port 19a, 19b is selectively connected to a duct for supplying compressed air or to the atmosphere. When the ports 19a, 19b, 18a, 18b are both connected to the atmosphere, the action of the spring 20a, 20b on the flow control element 7a, 7b keeps the head 6a, 6b of the flow control element 7a, 7b engaged with the sealing region 5a, 5b, closing the valve, as shown in Figures 1 and 5.

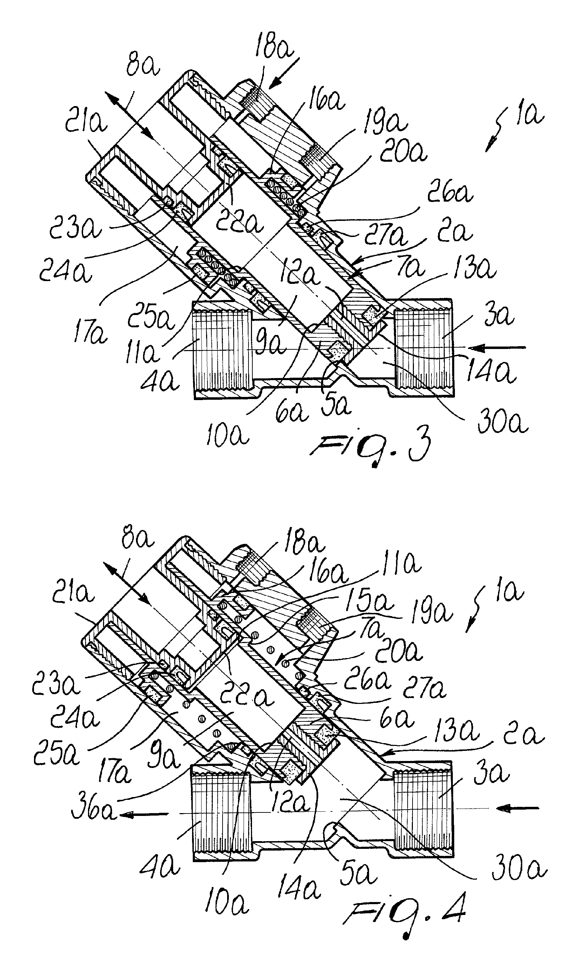

By introducing compressed air through the port 19a, 19b, the flow control element 7a, 7b is made to move toward the cap 21a, 21b, consequently disengaging and spacing the head 6a, 6b from the sealing region 5a, 5b, thus opening the valve and mutually connecting the intake port 3a, 3b and the delivery port 4a, 4b, as shown in Figures 2 and 6.

If instead a normally-open valve is required, as shown in Figures 3, 4, 7 and 8, the spring 20a, 20b is placed inside the other half-chamber of the actuation chamber 17a, 17b between the plunger-like portion 16a, 16b and the shoulder 36a, 36b. In this case, the port 19a, 19b is constantly connected to the atmosphere, while the port 18a, 18b can be selectively connected to a duct for feeding compressed air or to the atmosphere.

When both ports 18a, 18b, 19a, 19b are connected to the atmosphere, the action of the spring 20a, 20b keeps the valve in the open position, i.e., in the position in which the head 6a, 6b is disengaged and spaced from the sealing region 5a, 5b, as shown in Figures 4 and 8.

By introducing compressed air through the port 18a, 18b, the flow control element 7a, 7b is moved until its head 6a, 6b engages the sealing region 5a, 5b, thus closing the valve, as shown in Figures 3 and 7. The closure of the valve causes the compression of the spring 20a which, by elastic reaction, moves the flow control element into the open position as soon as the port 18a, 18b is connected to the atmosphere, as shown in Figures 3 and 7.

If instead a double-acting valve, i.e., a valve in which opening and closure are actuated pneumatically, is required, the spring 20a, 20b is omitted and the ports 18a, 18b, 19a, 19b are alternatively connected to a compressed air supply duct or to the atmosphere, so as to cause the translation movement of the flow control element 7a, 7b in one direction or in the opposite direction.

It should be noted that the spring 20a, 20b can also be used in double-acting valves if one wishes to speed up the opening or closing movement of the flow control element 7a, 7b.

In practice it has been observed that the valve according to the invention fully achieves the intended aim and objects, since by balancing the forces that act on the flow control element as a consequence of the pressure of the fluid that flows through the valve, it is possible to actuate the flow control element with reduced forces and therefore with compact actuators, thus also reducing the overall dimensions of the valve.

Another advantage of the valve according to the invention is that it can be easily assembled or disassembled simply by removing the cap that closes the branch of the body of the valve that accommodates the flow control element.

The valve thus conceived is susceptible of numerous modifications and variations, all of which are within the scope of the inventive concept; all the details may further be replaced with other technically equivalent elements.

In practice, the materials employed, as well as the dimensions, may be any according to requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A fluid flow control valve with integrated pneumatic actuation, comprising a valve body which forms, inside it, a passage chamber for a fluid which is connected to an intake port and a delivery port; a sealing region being formed inside said passage chamber, between said intake port and said delivery port, and being engageable by a head of a flow control element which can move on command along an actuation path in order to pass from an open position, in which said head is disengaged and spaced from said sealing region in order to allow the connection of said intake port to said delivery port, to a closed position, in which said head engages said sealing region in order to interrupt connection of said intake port with said delivery port, and vice versa; pneumatic actuation means being provided in order to move, at least in one direction, said flow control element along said actuation path, **characterized in that** in said flow control element there is a compensation chamber which is connected in terms of pressure to said passage chamber, and **in that** in said compensation chamber there are regions for applying pressure of the fluid which are adapted to convert said pressure into a contrasting force which is parallel to said actuation path and is orientated in an opposite direction with respect to a force that is parallel to said actuation path and is generated by a pressure of said fluid on a side of said head of the flow control element that is directed toward said sealing region.

2. The valve according to claim 1, **characterized in that** said regions for applying the pressure of the fluid in said compensation chamber and the region for applying the pressure of the fluid on the side of said head of the flow control element that is directed toward said sealing region have substantially mutually identical protrusions on a plane which is perpendicular to said actuation path in order to balance said force by means of said contrasting force.

3. The valve according to claim 1, **characterized in that** said compensation chamber, when said flow control element is in said closed position, is connected to said intake port.

4. The valve according to claim 1, **characterized in that** said flow control element is substantially cylindrical with an axis which is parallel to said actuation path, said head of the flow control element being constituted by an axial end of the flow control element.

5. The valve according to claim 1, **characterized in that** said sealing region is formed by an annular shoulder which is formed in said body and is arranged at right angles to an axis of said flow control element, said head of the flow control element supporting, in a front region, a gasket which faces said annular shoulder.

6. The valve according to claim 1, **characterized in that** said sealing region is formed by a cylindrical or conical surface which is formed inside said body, coaxially to said flow control element, said head of the flow control element supporting, on a cylindrical side wall thereof, a gasket which can engage or disengage said cylindrical or conical surface that constitutes said sealing region.

7. The valve according to claim 1, **characterized in that** said compensation chamber is connected, in terms of pressure, to said passage chamber through an axial passage which is formed in said head of the flow control element.

8. The valve according to claim 1, **characterized in that** said regions of the compensation chamber for applying said pressure are formed by at least an increase in diameter of said compensation chamber starting from said head toward the opposite axial end of said flow control element.

9. The valve according to claim 1, **characterized in that** on an outer lateral surface of said flow control element there is at least one axial shoulder which can engage an abutment provided inside said body in order to limit a stroke of said flow control element toward said sealing region.

10. The valve according to claim 1, **characterized in that** said pneumatic actuation means comprise a portion of the axial extension of said flow control element which is provided as a plunger and can slide within a cylindrical actuation chamber formed in said body coaxially around said flow control element, said plunger-like portion dividing said actuation chamber into two half-chambers, at least one of which can be fed with compressed air in order to move said flow control element in one direction along said actuation path.

11. The valve according to claim 10, **characterized in that** said two half-chambers can both be alternatively supplied with compressed air for the movement of said flow control element along said actuation path in one direction or in the opposite direction.

12. The valve according to claim 11, **characterized in that** it comprises elastic means which are interposed between said flow control element and said body in order to contrast or assist the movement of said flow control element produced by the injection of compressed air into at least one of said half-chambers.

13. The valve according to claim 12, **characterized in that** said elastic means comprise a spring which is arranged in at least one of said half-chambers and is interposed between said plunger-like portion of the flow control element and an axial end of said actuation chamber.

14. The valve according to claim 13, **characterized in that** the axial end of said actuation chamber that lies opposite with respect to the head of the flow control element is closed by a cap which can be removed in order to extract or insert said flow control element with respect to said body.

15. The valve according to claim 14, **characterized in that** said cap has, on a side directed toward a inside of said body, a cylindrical protrusion which is coaxial to said flow control element and slidingly engages inside the axial end of said flow control element that lies opposite with respect to its head, said protrusion closing said compensation chamber and said actuation chamber on an opposite side with respect to said head of the flow control element.

16. The valve according to claim 1, **characterized in that** said intake port is aligned with said delivery port and **in that** the axis of said flow control element is inclined with respect to the direction of the fluid that enters said intake port at an angle of more than 90°.

17. The valve according to claim 1, **characterized in that** an annular chamber connected to said passage chamber is formed around the lateral surface of said flow control element, proximate to said head.
